# EUROPEAN PATENT SPECIFICATION

(11) **EP 3 730 797 B1**
(45) Date of publication and mention of the grant of the patent: **18.08.2021**
(21) Application number: 20168989.0
(22) Date of filing: 09.04.2020
(51) Int. Cl.: F04D 1/06, F04D 9/00, F04D 15/00, F16K 37/00

(54) **NON-RETURN VALVE FOR A SUBMERSIBLE PUMP AND RELATED SUBMERSIBLE PUMP**
RÜCKSCHLAGVENTIL FÜR EINE TAUCHPUMPE UND ZUGEHÖRIGE TAUCHPUMPE
SOUPAPE DE RETENUE POUR UNE POMPE SUBMERSIBLE ET POMPE SUBMERSIBLE ASSOCIÉE

(30) Priority: 23.04.2019 IT 201900006264
(43) Date of publication of application: 28.10.2020
(73) Proprietor: CALPEDA S.p.A., I-36050 Montorso Vicentino (VI) (IT)
(72) Inventor: BANZATO, Stefano, 36075 Montecchio Maggiore (VI) (IT); MENARA, Ivan, 36042 Breganze (VI) (IT)
(74) Representative: Ferreccio, Rinaldo

(56) References cited:
- EP-A1- 2 990 653
- US-A- 3 478 775
- US-A- 5 261 437

## Description

### Technical field

The present invention refers to a non-return valve for the delivery of a submersible pump.

The present invention refers also to a submersible pump comprising said non-return valve.

### Background art

The non-return valve are valves' types allowing the fluid passage in one direction only.

Such valves are generally consisting of a valve body encasing a chamber for the passage of the fluid between an inlet and an outlet. Within the chamber a shutter is present, said shutter being mobile between a valve closure position wherein the flow through said inlet is prevented and a valve open position wherein the flow is allowed.

Non-return valves are used at the delivery of submersible pumps.

The submersible pumps are hydraulic pumps arranged to be immersed in the fluid to be pumped. Particularly, such pumps are used in several applications, for example to extract water from a well or to empty a swimming pool or to raise sewage.

A non-return valve is generally mounted at the delivery opening of the submersible pump where the delivery pipe which conveys the fluid delivered by the pump to the surface is connected.

The valve allows the delivery flow preventing the return flow when the pump is off. This prevents emptying of the delivery pipe above the pump.

A pressure sensor for the pump delivery pressure measurement is generally mounted downstream the non-return valve.

The pressure sensor is connected to the pump electronics by external harness to the pump itself.

While advantageous in many ways the non-return valves and the submersible pumps using such valves have several drawbacks linked in particular to the whole system size.

The presence of a pressure sensor externally connected to the submersible pump contributes to complicate the assembly with risk of malfunction of the pump due to the inexperience of the fitter. In addition, the presence of the sensor connection cables to the pump electronics contributes to further increase the complexity of the pumping system.

Nonetheless, the sensor and the aforementioned cables help to define the overall size of the entire pumping system.

The technical problem underlying the present invention is that of devising a non-return valve and a submersible pump comprising such valve and a pressure sensor such as to allow to overcome the drawbacks envisaged by the prior art.

A particular object of the present invention is to devise a non-return valve and a submersible pump which allows to minimize the overall size while guaranteeing a continuous measurement of the delivery pressure even when the pump is off.

A further object of the present invention is to simplify the construction of the submersible pump.

### Summary of the invention

The solution idea underlying the present invention is to bring the pressure sensor inside the pump to measure the delivery pressure, thus reconfiguring the valve for its connection with this sensor.

On the basis of this solution idea the technical problem is solved by a non-return valve for a submersible pump comprising:
- a valve body arranged to be associated with a submersible pump in operative configuration;
- a chamber inside the valve body provided with an inlet arranged to be associated with a delivery opening of the submersible pump in the operative configuration and an outlet of fluid;
- a shutter located within the chamber to selectively interrupt the flow of fluid between the inlet and said outlet, depending on the difference between the pressure upstream and pressure downstream the shutter.
The non-return valve comprises a measuring duct provided with an access port which opens inside the chamber; the measuring duct being connectable in operative configuration to a pressure sensor located internally of the submersible pump.

In other words, the measuring duct is arranged to put the valve chamber and the inside of the pump in fluid communication, or with a pressure sensor located internally of the pump. In this way, it is possible to obtain a measurement of the delivery pressure of the pump avoiding the use of an external pressure sensor and of external cables to connect the pressure sensor to the control electronics inside the pump.

The shutter of said non-return valve is of a type slidable along a guide stem of the valve body and the measuring duct may extend along the guide stem.

The duct access port opens at the end of the guide stem, or in a position of the chamber which is also downstream the shutter. The sensor will thus be in fluid communication with the delivery conduct both with closing valve and with opening valve allowing the pressure measurement in both cases.

The valve body preferably comprises a connecting projection projecting towards the outside of the chamber and the measuring duct may extend linearly along a longitudinal axis passing the guide shaft and the connecting projection in sequence.

The connecting projection is advantageously provided to connect the measuring duct to the pressure sensor locating internally of the pump.

Moreover, the connecting projection preferably comprises a connecting end integrally fixable inside the pump. In particular, such connecting end may be threaded to be thread in a corresponding seat obtained inside the pump. The measuring duct may advantageously open at the connecting end to allow the measuring duct and the sensor connected to the projecting connection to be in fluid communication.

The non-return valve is further preferably provided with elastic countering means acting on the shutter to keep it in a position that interrupts the flow of fluid between the inlet and the outlet.

The elastic countering means may particularly be a spring.

The guide stem may advantageously provide, at least in a portion of it away from the base, a cross section having sliding contact areas of the shutter separated by concavities not in contact with the shutter. The seizure in the presence of any contaminants present in the fluid that passes through the valve (for example: sand, algae) is prevented due to said shape.

The above-mentioned technical problem is also solved by a submersible pump comprising a non-return valve, as previously disclosed, at a delivery opening of the pump itself, and a pressure sensor inside the pump connected to the measuring duct of the non-return valve.

Said submersible pump allows to avoid the use of a pressure sensor external to the pump to measure the delivery pressure, said sensor being instead integrated inside the pump. In such a way an overall size reduction and a complexity reduction of the whole pumping system are achieved.

The submersible pump may advantageously further comprise a plate element placed internally of the submersible pump below a bottom plate on which the delivery opening opens.

The plate element may comprise, in particular, a first connecting seat and a second connecting seat opposite and in fluid communication with each other; the first connecting seat is coupled with the pressure sensor and the second connecting seat is coupled with the measuring duct.

The so formed plate element allows to integrally constrain both the valve and the pressure sensor to the pump and at the same time to put the valve measuring duct and the pressure sensor in fluid communication.

In particular, the first connecting seat and/or the second connecting seat realize preferably a threaded coupling.

Further features and advantages of the non-return valve and of the submersible pump comprising such valve will become apparent from the detailed description made below of a preferred, not limitative, embodiment, and from the annexed claims.

### Brief description of drawings

The invention is disclosed with reference to the following figures given by way of example but not limitative, wherein:
- Figure 1 represents a first perspective view of an embodiment of the non-return valve according to the present invention;
- Figure 2 represents a second perspective view of the non-return valve of Figure 1;
- Figure 3 represents an exploded view of the non-return valve of figure 1;
- Figure 4 represents an upper view of the non-return valve of figure 1;
- Figure 5 represents a lower view of the non-return valve of Figure 1;
- Figure 6 represents a side cutaway view according to a median plane of the non-return valve of Figure 4 in the fully closed condition;
- Figure 7 represents a side cutaway view according to a median plane of the non-return valve of Figure 4 in the fully open condition;
- Figure 8 represents a cutaway side view according to a median plane of a submersible pump according to the present invention;
- Figure 9 represents a detail of the submersible pump of figure 8.

In the different figures, same elements will be identified by same reference numbers.

### Detailed description

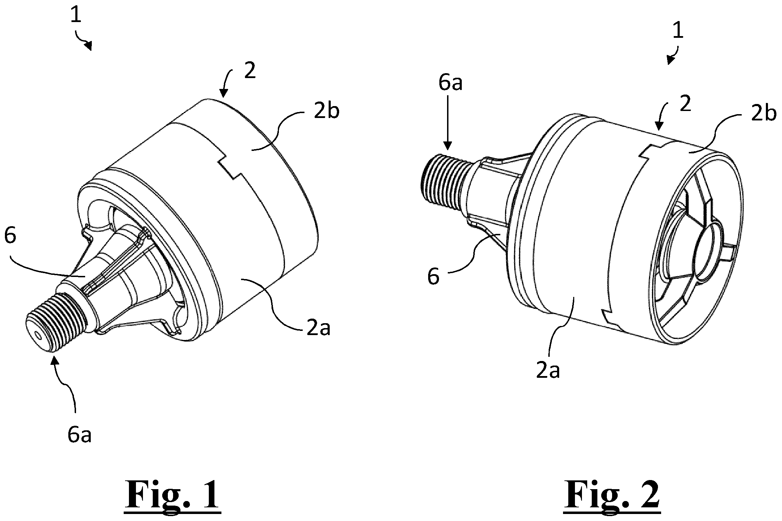

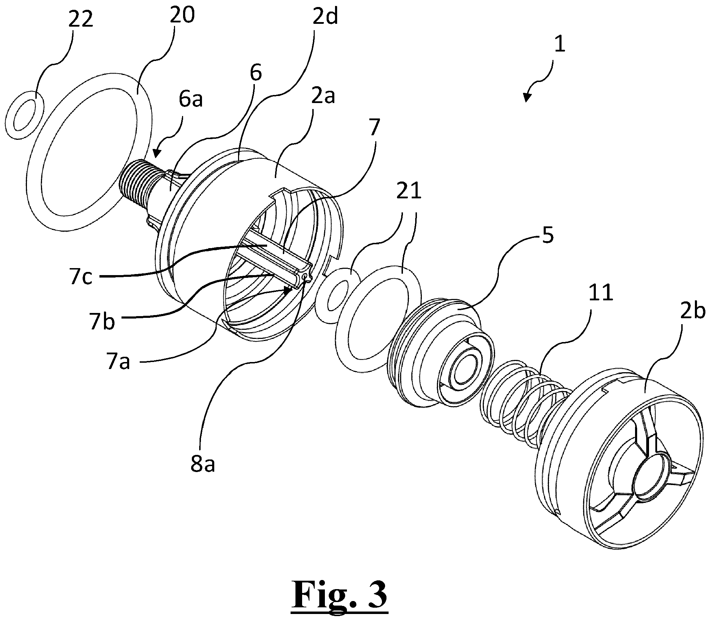

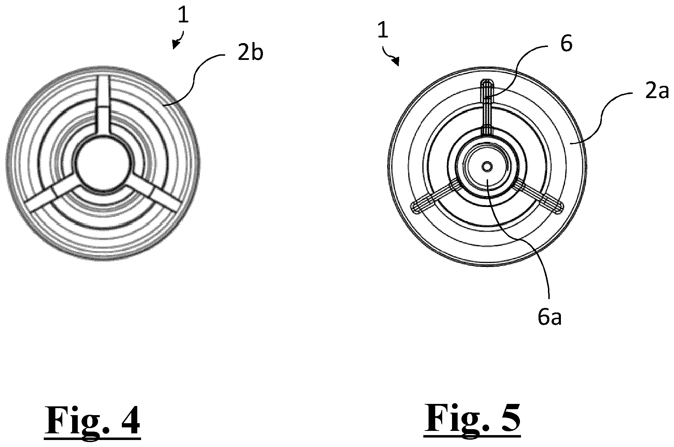

With particular reference to the figures 1-7, with 1 is globally and schematically indicated a non-return valve according to the present invention.

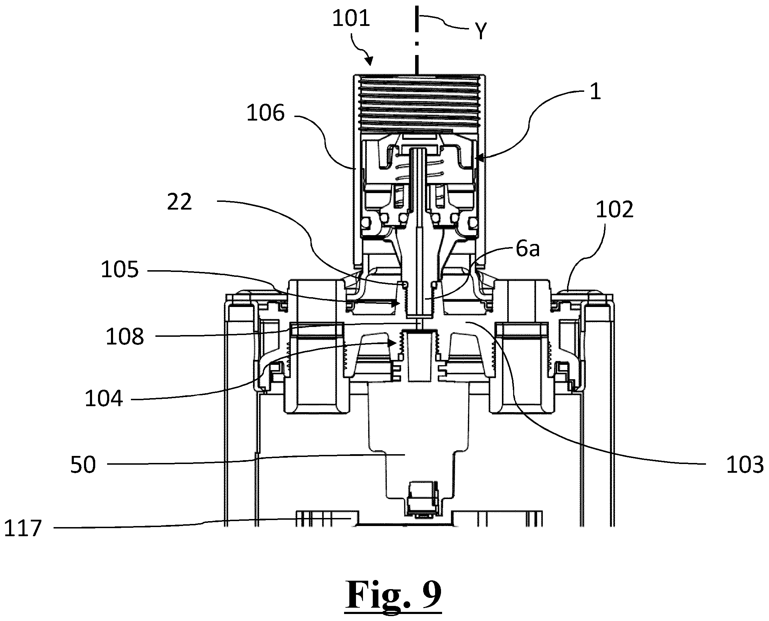

Any position references adopted in the description, comprising indications such as above r below, upper or lower, or similar phrases, will always refer to the preferred operating configuration, shown in figure 9.

The non-return valve is mounted herein at a delivery opening 101 of a submersible pump 100 to prevent the return flow when the pump is off.

Generally speaking, the non-return valve 1 comprises a hollow valve body 2 which defines inside a chamber 10 provided with an inlet 3 associable to a delivery opening 101 of a pump, in particular a submersible pump 100, and an outlet 4 for a fluid delivered by the pump.

The valve is preferably constituted of plastic material, still more preferably of polyoxymethylene. This does not exclude that it could be constituted of metallic material, such as the brass, or other material.

The non-return valve 1 further comprises a shutter 5 that is mobile within the chamber 10 between a closing position of the inlet 3 wherein the fluid delivered by the pump is prevented to enter in the chamber 10 and an opening position wherein the fluid delivered by the pump is free to enter through the inlet 3 in the chamber 10 and to exit through the outlet 4. The switch between opening position and closing position occurs as a function of the differential pressure acting on the shutter 5 and of the counteracting action of the elastic mean 11, In particular, the fluid pressure is such as to keep the vale open when the pump is running, on the contrary, the pressure decreases closing the valve and avoiding the return flow when the pump is off.

The outlet 4 of the non-return valve 1 may be connected to a hydraulic circuit located downstream the pump, such as a pipe that brings water from a well in which the pump is immersed at ground level.

Advantageously, the non-return valve 1 further comprises a measuring duct 8 to measure the pressure inside the chamber 10, that is the delivery pressure of the pump. In fact, the measuring duct 8 is provided on one side with an access port 8a that opens in the chamber and on the other side it is connectable to a pressure sensor 50 located internally of the pump 100 when the valve is mounted on the pump delivery, as will become clearer hereafter.

So, the fluid present in the chamber 10 is free to enter through the access port 8a in the measuring duct 8, to travelling the duct until it reaches the sensor for the pressure measurement inside the chamber 10.

In the disclosed embodiment, the chamber 10 is defined by the coupling with snap undercuts of a lower valve body portion 2a and an upper valve body portion 2b which constitute the valve body 2.

The lower valve body portion 2a includes a radial groove 2d arranged to accommodate a gasket 20 for the seal coupling within the delivery opening 101 of the pump 100.

A connecting projection 6 frontally extends from lower valve body portion 2a, or overhanging towards the outside of the chamber 10, along a longitudinal axis X of the valve body 2 centrally covering the access to the inlet 3 and thus allowing the fluid passage through the inlet 3 near the connecting projection 6. The connecting projection 6 extends from a base 6b at a threaded frontal connecting end 6a arranged to be connected to the pressure sensor 50 internal to the pump 100.

A guide stem 7, integral to the base 6b of the connecting projection 6, superiorly extends from the base 6b along the longitudinal axis X of the valve body 2 inside the chamber 10.

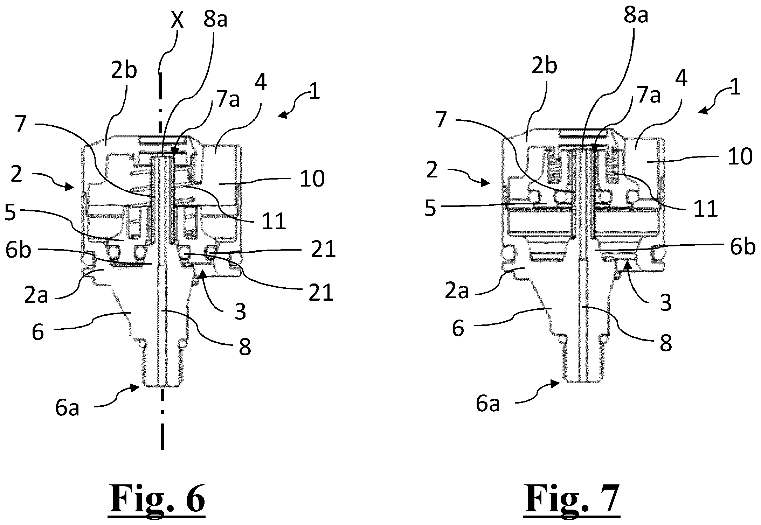

In the herein disclosed embodiment, the shutter 5 is of the annular type and slidable along the guide stem 7. Seals 21 are associated with the shutter 5 to ensure sealing during the closure of the valve 1 against the internal wall of the lower valve body portion 2a and the base 6b of the connecting projection 6. As can be seen from Figure 6, the gaskets 21 abut against conical surfaces.

The measuring duct 8 extends linearly along the longitudinal axis X by passing the guide stem 7 and the connecting projection 6 in sequence. In particular, the measuring duct 8 extends from the access port 8a which opens at a guide rod end 7a until it flows into the connecting end 6a of the connecting projection6. As can be seen from figures 6 and 7, the access port 8a opens downstream the shutter both when the valve is completely open (figure 7) and when it is completely closed (6). In this way, it is advantageously possible to measure the fluid pressure inside the chamber 10 by means of the pressure sensor 50 both when the pump is running (valve open) and when the pump is off (valve closed), while avoiding the reflow of fluid from the delivery into the pump.

Advantageously, the guide stem 7 has, away from the base 6b where the shutter 5 slides, a cross section which has sliding contact areas 7b of the shutter 5 separated by concavities 7c not in contact with the shutter 5.

In the disclosed embodiment, the cross section of the shutter 5 is square net of the concavities 7c.

Clearly, alternative embodiments may provide for other cross-sectional shapes which in any case allow to minimize the contact surfaces between the guide stem and shutter, leaving empty spaces between them to prevent seizure in the presence of any contaminants present in the fluid passing through the valve, such as sand, mucilage, etc.

The non-return valve 1 is also equipped with elastic countering means 11 located below the shutter 5 and acting on the shutter 5 itself to keep it in the closed position of the inlet 3.

In the herein disclosed embodiment, these elastic countering means are a spring. The spring is located on one side with the shutter 5 and on the other against the bottom of the upper valve body portion 2b. The pressure downstream the shutter 5 is given by the spring thrust and by the delivery fluid column. The elastic constant of the spring is chosen in such a way as to keep the valve closed and at the same time avoid excessive pressure drops.

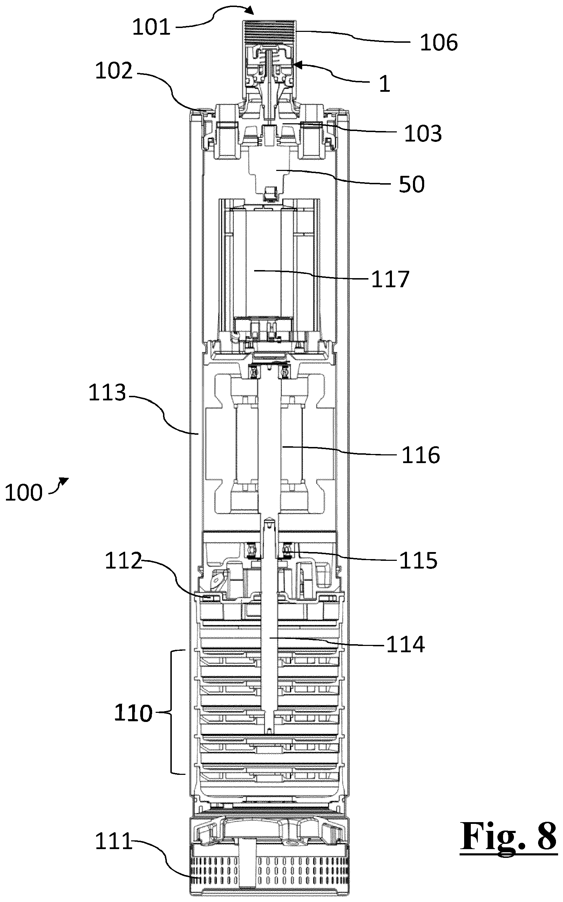

With particular reference to annexed Figures 8-9, with 100 is globally and schematically indicated a submersible pump 100, comprising a non-return valve according to the present invention.

The herein disclosed embodiment of submersible pump 100 is of the multistage type, such as to allow for example a head of up to 300/400 meters. Said pump 100 is provided with a multistage hydraulic unit 110 composed of a series of impellers and distributors, located downstream an intake grille 111. The fluid entering through the intake grille 111, moved by the impellers of the hydraulic group 110 passes through the slots 112 and an interspace made by a double tubular liner 113, reaching a delivery opening 101 opposite the intake grille 111.

The impellers are integrally fixed to a transmission shaft 114, supported by respective bearings 115 and rotated due to the presence of a motor 116, for example an asynchronous electric motor.

The control of the motor 116 takes place thanks to the presence of a control electronics 117 inside the pump and connected to the motor itself.

The delivery opening 101 opens at a bottom plate 102 which closes the end of the pump 100 opposite the intake grille 111. In particular, the delivery opening 101 is delimited by a delivery sleeve 106 connectable to the hydraulic circuit powered by pump 100. The delivery sleeve 106 extends along a sleeve longitudinal axis Y.

A plate element 103 is fixed inside the pump 100 below the bottom plate 102.

As shown in the detail illustrated in figure 9, the plate element 103 comprises a first connecting seat 104 on the internal side and a second connecting seat 105 on the opposite external side. Both connecting seats 104, 105 extend along the sleeve longitudinal axis Y.

Furthermore, the connecting seats 104, 105 are placed in fluid communication through a hole, defining a passage 108.

The submersible pump 100 also advantageously comprises an internal pressure sensor 50 coupled to the first connecting seat 104.

In the herein disclosed embodiment, the coupling is of the threaded type.

The pump 100 also advantageously comprises a non-return valve 1 according to the present invention.

In particular, the non-return valve 1 is inserted in the delivery sleeve 106 in such a way as to couple the connecting end 6a of the connecting projection 6 with the second connecting seat 105. A gasket 22 is preferably interposed between the connecting end 6a and the second connecting seat 105 and between the pressure sensor 50 and the first connecting seat 104.

In the herein disclosed embodiment, this second coupling is also of the threaded type.

As can be seen from Figure 9, the coupling between the coupling end 6a and the second connecting seat 105 is such as to make the longitudinal axis X of the valve 1 coincide with the sleeve axis Y and to carry out the fluid communication between the measuring duct 8 of the valve 1 and the pressure sensor 50.

The pressure sensor 50 inside the pump 100 is advantageously directly connected to the control electronics 117 of the motor 116.

The submersible pump and the non-return valve according to the invention solve the technical problem and achieve numerous advantages, including that of extremely reducing the size of the pump system including the submersible pump, the non-return valve and the pressure sensor.

In fact, the fact that the non-return valve is provided with a measuring duct that puts the valve chamber in fluid communication with the inside of the pump when this valve is mounted at the delivery, allows to integrate the pressure sensor inside the pump reducing the overall size and complexity of the whole system.

Furthermore, the sensor inside the pump may be advantageously directly connected to the motor control electronics without the need to use external cables.

Advantageously, the valve measuring duct extends along the valve guide stem so that its access is in fluid communication with the chamber both when the valve is open and when the valve is closed. In this way, it is possible to have a continuous measurement of the pressure in the chamber, i.e. the delivery pressure of the pump, both when the valve is open and the pump running (operating pressure), and when the valve is close, and the pump is off.

Advantageously, moreover, the pump is provided with a plate element fixed to the pump below the delivery bottom plate. This plate element allows the non-return valve and the pressure sensor to be permanently connected to the pump frame and at the same time to put the valve measuring duct in fluid communication with the pressure sensor itself.

Obviously, a skilled in the art can make numerous modifications and variations to the non-return valve and to the submersible pump described above in order to satisfy contingent and specific needs, all included in the scope of protection of the invention as defined by the following claims.

## Claims

1. Non-return valve (1) for a submersible pump (100) comprising:
- a valve body (2) arranged to be associated with a submersible pump (100) in operative configuration;
- a chamber (10) inside said valve body (2) provided with an inlet (3) arranged to be associated with a delivery opening (101) of said submersible pump (100) in said operative configuration and an outlet (4) of fluid;
- a shutter (5) located within said chamber (10) to selectively interrupt the flow of fluid between said inlet (3) and said outlet (4), depending on the difference between the pressure upstream and pressure downstream said shutter (5);
- a measuring duct (8) provided with an access port (8a) which opens inside said chamber (10); said measuring duct (8) being connectable in operative configuration to a pressure sensor (50) located internally of said submersible pump (100), wherein said shutter (5) is slidable along a guide stem (7) of the valve body (2); said measuring duct (8) extending along said guide stem (7).

2. Non-return valve (1) according to claim 1, wherein said valve body (2) comprises a connecting projection (6) projecting towards the outside of said chamber (10), said measuring duct (8) extending linearly along a longitudinal axis (X) passing said guide shaft (7) and said connecting projection (6) in sequence.

3. Non-return valve (1) according to claim 2, wherein said connecting projection (6) comprises a threaded connecting end (6a); the measuring duct (8) opening at said connecting end (6a).

4. Non-return valve (1) according to one of the preceding claims, comprising elastic countering means (11) acting on said shutter (5) to keep it in a position that interrupts the flow of fluid between said inlet (3) and said outlet (4).

5. Non-return valve (1) according to claim 4, wherein said elastic countering means (11) are a spring.

6. Non-return valve (1) according to one of claims 1-3, wherein said guide stem (7) has, at least in a portion of it away from the base, a cross section having sliding contact areas (7b) of said shutter (5) separated by concavities (7c) not in contact with the shutter.

7. Submersible pump (100) comprising a non-return valve (1) according to at least one of the preceding claims at a delivery opening (101) of said submersible pump (100), and a pressure sensor (50) inside the pump connected to said measuring duct (8) of said non-return valve (1).

8. Submersible pump (100) according to claim 7, comprising a plate element (103) placed internally of said submersible pump (100) below a bottom plate (102) on which said delivery opening (101) opens; said plate element (103) comprising a first connecting seat (104) and a second connecting seat (105) opposite and in fluid communication with each other; said first connecting seat (104) being coupled with said pressure sensor (5) and said second connecting seat (105) being coupled with said measuring duct (8).

9. Submersible pump (100) according to claim 8, wherein said first connecting seat (104) and/or said second connecting seat (105) realize a threaded coupling.

## Patentansprüche

1. Rückschlagventil (1) für eine tauchfähige Pumpe (100), das Folgendes umfasst:
- einen Ventilkörper (2), der ausgelegt ist, in einer Betriebskonfiguration einer tauchfähigen Pumpe (100) zugeordnet zu sein;
- eine Kammer (10) im Inneren des Ventilkörpers (2), die mit einem Einlass (3), der ausgelegt ist, in der Betriebskonfiguration einer Zufuhröffnung (101) der tauchfähigen Pumpe (100) zugeordnet zu sein, und einem Auslass (4) eines Fluids versehen ist;
- eine Klappe (5), die in der Kammer (10) angeordnet ist, um wahlweise den Fluidstrom zwischen dem Einlass (3) und dem Auslass (4) abhängig von der Differenz zwischen dem Druck stromaufwärts und dem Druck stromabwärts der Klappe (5) zu unterbrechen;
- einen Messkanal (8), der mit einer Zugangsöffnung (8a) versehen ist, die sich im Inneren der Kammer (10) öffnet; wobei der Messkanal (8) in einer Betriebskonfiguration mit einem Drucksensor (50) verbunden werden kann, der innerhalb der tauchfähigen Pumpe (100) angeordnet ist, wobei die Klappe (5) entlang eines Führungsschafts (7) des Ventilkörpers (2) gleiten kann; wobei sich der Messkanal (8) entlang des Führungsschafts (7) erstreckt.

2. Rückschlagventil (1) nach Anspruch 1, wobei der Ventilkörper (2) einen Verbindungsvorsprung (6) umfasst, der in Richtung der Außenseite der Kammer (10) vorsteht, wobei sich der Messkanal (8) entlang einer Längsachse (X), die nacheinander durch den Führungsschaft (7) und den Verbindungsabschnitt (6) verläuft, geradlinig erstreckt.

3. Rückschlagventil (1) nach Anspruch 2, wobei der Verbindungsvorsprung (6) ein Schraubverbindungsende (6a) umfasst; wobei der Messkanal (8) in das Verbindungsende (6a) mündet.

4. Rückschlagventil (1) nach einem der vorhergehenden Ansprüche, das elastische Gegenhaltungsmittel (11) umfasst, die auf die Klappe (5) wirken, um sie in einer Position zu halten, die den Fluidstrom zwischen dem Einlass (3) und dem Auslass (4) unterbricht.

5. Rückschlagventil (1) nach Anspruch 4, wobei die elastischen Gegenhaltungsmittel (11) eine Feder sind.

6. Rückschlagventil (1) nach einem der Ansprüche 1-3, wobei der Führungsschaft (7) zumindest in seinem Abschnitt, der vom Sockel entfernt ist, einen Querschnitt mit Gleitkontaktflächen (7b) der Klappe (5) aufweist, die durch Konkavitäten (7c) getrennt sind, die sich nicht mit der Klappe in Kontakt befinden.

7. Tauchfähige Pumpe (100), die ein Rückschlagventil (1) nach mindestens einem der vorhergehenden Ansprüche an einer Zufuhröffnung (101) der tauchfähigen Pumpe (100) und einen Drucksensor (50) im Inneren der Pumpe, der mit dem Messkanal (8) des Rückschlagventils (1) verbunden ist, umfasst.

8. Tauchfähige Pumpe (100) nach Anspruch 7, die ein Plattenelement (103) umfasst, das innerhalb der tauchfähigen Pumpe (100) unter einer Bodenplatte (102) angeordnet ist, auf der sich die Zufuhröffnung (101) öffnet; wobei das Plattenelement (103) einen ersten Verbindungssitz (104) und einen zweiten Verbindungssitz (105) umfasst, die einander gegenüberliegen und sich in Fluidverbindung miteinander befinden, wobei der erste Verbindungssitz (104) mit dem Drucksensor (5) gekoppelt ist und der zweite Verbindungssitz (105) mit dem Messkanal (8) gekoppelt ist.

9. Tauchfähige Pumpe (100) nach Anspruch 8, wobei der erste Verbindungssitz (104) und/oder der zweite Verbindungssitz (105) eine Schraubkopplung realisieren.

## Revendications

1. Clapet anti-retour (1) pour pompe submersible (100) comprenant :
- un corps de clapet (2) agencé pour être associé à une pompe submersible (100) en configuration opérationnelle ;
- une chambre (10) à l'intérieur dudit corps de clapet (2) pourvue d'une entrée (3) agencée pour être associée à une ouverture de distribution (101) de ladite pompe submersible (100) dans ladite configuration opérationnelle et d'une sortie (4) de fluide ;
- un obturateur (5) situé à l'intérieur de ladite chambre (10) pour interrompre de manière sélective l'écoulement de fluide entre ladite entrée (3) et ladite sortie (4), en fonction de la différence entre la pression en amont et la pression en aval dudit obturateur (5) ;
- un conduit de mesure (8) pourvu d'un orifice d'accès (8a) qui s'ouvre à l'intérieur de ladite chambre (10) ; ledit conduit de mesure (8) pouvant être raccordé en configuration opérationnelle à un capteur de pression (50) situé à l'intérieur de ladite pompe submersible (100), ledit obturateur (5) pouvant coulisser le long d'une tige de guidage (7) du corps de clapet (2) ; ledit conduit de mesure (8) s'étendant le long de ladite tige de guidage (7).

2. Clapet anti-retour (1) selon la revendication 1, dans lequel ledit corps de clapet (2) comprend une saillie de raccordement (6) faisant saillie vers l'extérieur de ladite chambre (10), ledit conduit de mesure (8) s'étendant de façon linéaire le long d'un axe longitudinal (X) passant par ladite tige de guidage (7) et ladite saillie de raccordement (6) dans l'ordre.

3. Clapet anti-retour (1) selon la revendication 2, dans lequel ladite saillie de raccordement (6) comprend une extrémité de raccordement filetée (6a) ; le conduit de mesure (8) s'ouvrant au niveau de ladite extrémité de raccordement (6a).

4. Clapet anti-retour (1) selon l'une des revendications précédentes, comprenant des moyens d'opposition élastiques (11) agissant sur ledit obturateur (5) pour le maintenir dans une position qui interrompt l'écoulement de fluide entre ladite entrée (3) et ladite sortie (4).

5. Clapet anti-retour (1) selon la revendication 4, dans lequel lesdits moyens d'opposition élastiques (11) sont un ressort.

6. Clapet anti-retour (1) selon l'une des revendications 1 à 3, dans lequel ladite tige de guidage (7) présente, au moins dans une partie de celle-ci éloignée de la base, une section transversale présentant des zones de contact coulissantes (7b) dudit obturateur (5) séparées par des concavités (7c) qui ne sont pas en contact avec l'obturateur.

7. Pompe submersible (100) comprenant un clapet anti-retour (1) selon au moins l'une des revendications précédentes au niveau d'une ouverture de distribution (101) de ladite pompe submersible (100), et un capteur de pression (50) à l'intérieur de la pompe raccordé audit conduit de mesure (8) dudit clapet anti-retour (1).

8. Pompe submersible (100) selon la revendication 7, comprenant un élément de plaque (103) placé à l'intérieur de ladite pompe submersible (100) en dessous d'une plaque inférieure (102) sur laquelle s'ouvre ladite ouverture de distribution (101) ; ledit élément de plaque (103) comprenant un premier siège de raccordement (104) et un second siège de raccordement (105) opposés l'un à l'autre et en communication fluidique l'un avec l'autre ; ledit premier siège de raccordement (104) étant couplé audit capteur de pression (5) et ledit second siège de raccordement (105) étant couplé audit conduit de mesure (8).

9. Pompe submersible (100) selon la revendication 8, dans laquelle ledit premier siège de raccordement (104) et/ou ledit second siège de raccordement (105) réalisent un couplage fileté.
